(19) Europäisches Patentamt
European Patent Office
Office européen des brevets

(11) Publication number: 0 167 897
A1

(12) EUROPEAN PATENT APPLICATION

(21) Application number: 85107561.4

(22) Date of filing: 19.06.85

(51) Int. Cl.4: C 08 L 67/02
//C08K7/14, (C08L67/02, 71:00)

(30) Priority: 20.06.84 US 622492

(43) Date of publication of application:
15.01.86 Bulletin 86/3

(84) Designated Contracting States:
AT BE CH DE FR GB IT LI LU NL SE

(71) Applicant: UNION CARBIDE CORPORATION
Old Ridgebury Road
Danbury Connecticut 06817(US)

(72) Inventor: Dickinson, Barry Lee
R.D. 2, 10 Dalley Street
Whitehouse Station New Jersey 08889(US)

(74) Representative: Weinhold, Peter, Dr. et al,
Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8
D-8000 München 40(DE)

(54) **Plasticized polyarylate compositions.**

(57) Described herein is a plasticized polyarylate composition comprising in admixture, a polyarylate derived from a dihydric phenol and at least one aromatic dicarboxylic acid and having a reduced viscosity of from about 0.4 to greater than 1.0 dl/g, from about 5 to about 30 weight percent of glass fiber, and a plasticizing amount of an oligomeric poly(aryl either) having a reduced viscosity of from about 0.10 to about 0.45 dl/g.

EP 0 167 897 A1

Croydon Printing Company Ltd

## BACKGROUND OF THE INVENTION

This invention is directed to a plasticized polyarylate composition comprising in admixture, a polyarylate derived from a dihydric phenol and at least one aromatic dicarboxylic acid and having a reduced viscosity of from about 0.4 to greater than 1.0 dl/g, from about 5 to about 30 weight percent of glass fibers, and a plasticizing amount of an oligomeric poly(aryl ether) having a reduced viscosity of from about 0.10 to about 0.45 dl/g.

Polyarylates are aromatic polyesters derived from a dihydric phenol, particularly 2,2-bis(4-hydroxyphenyl)propane, also identified as bisphenol-A, and an aromatic dicarboxylic acid, particularly mixtures of terephthalic and isophthalic acids. These polyarylates are high temperature, high performance thermoplastic polymers with a good combination of thermal and mechanical properties.

However, polyarylates are generally processed at temperatures of about 680°C. Further, in many applications, it is desirable to add glass fiber to the the polyarylate. The addition of the glass fiber to polyarylate results in an increase in viscosity of the blend which makes processing even more difficult. Additives have been proposed which lower the processing temperature and/or viscosity of the polyarylate blend. However, many of these additives are not stable at such high temperatures. Thus, there is a desire to lower the processing temperature and/or viscosity of the polyarylate

blend without effecting the mechanical properties. Also, if an additive is used to lower the processing temperature it must be compatible with and not degrade the polyarylate.

U.S. Patent Application Serial No. 233,697, filed on February 12, 1981, in the name of B.L. Dickinson, titled Plasticized Polyarylate Compositions, commonly assigned, describes a plasticized polyarylate composition comprising in admixture, a polyarylate derived from a dihydric phenol and at least one aromatic dicarboxylic acid having a reduced viscosity of from about 0.4 to greater than 1.0 dl/g and a plasticizing amount of an oligomeric poly(aryl ether) having a reduced viscosity of from about 0.10 to about 0.45 dl/g. This application discloses that glass may be an optional additive. However, such an incidental disclosure does not describe the problems associated with glass content of 5 to 30 weight percent or how to solve such problem.

## THE INVENTION

It has now been discovered that by admixing a plasticizing amount of an oligomeric poly(aryl ether) having a reduced viscosity of from about 0.10 to about 0.45 dl/g with a polyarylate derived from a dihydric phenol and at least one aromatic dicarboxylic acid having a reduced viscosity of from about 0.40 to greater than 1.0 dl/g, and from about 5 to about 30 weight percent of glass fibers, the composition may be processed at lower temperature, thus retaining the high mechanical properties of the polyarylate.

In the practice of this invetion, the oligomeric poly(aryl ethers) which may be used are linear, thermoplastic polyarylene polyether polysulfone oligomers wherein the arylene units are interspersed with ether and sulfone linkages. These resins may be obtained by reaction of an alkali metal double salt of a dihydric phenol and a dihalobenzenoid compound, either or both of which contain a sulfone or ketone linkage, i.e., $-SO_2-$ or -CO- between arylene groupings, to provide sulfone or ketone units in the polymer chain in addition to arylene units and ether units. The polysulfone polymer has a basic structure comprising recurring units of the formula:

$$-O-E-O-E'$$

wherein E is the residuum of the dihydric phenol and E' is the residuum of the benzenoid compound having an inert electron withdrawing group in at least one of the positions ortho and para to the valence bonds; both of said residua are valently bonded to the ether oxygens through aromatic carbon atoms. Such polysulfones are included within the class of polyarylene polyether resins described in U.S. patents 3,264,536, 4,108,837, and 4,175,175 for example.

The residuum of a dihydric phenol, E is derived from dinuclear phenols having the structure:

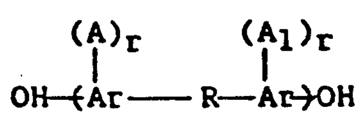

wherein Ar is an aromatic group and preferably is a

phenylene group, A and $A_1$ may be the same or different inert substituent groups, such as alkyl groups having from 1 to 4 carbon atoms, halogen atoms, i.e., fluorine, chlorine, bromine or iodine, or alkoxy radicals having from 1 to 4 carbon atoms, r and $r_1$ are integers having a value of from 0 to 4, inclusive, and R is representative of a bond between aromatic carbon atoms as in dihydroxydiphenyl, or is a divalent radical, including, for example, CO, O, S, S-S, $SO_2$ or a divalent organic hydrocarbon radical, such as alkylene, alkylidene, cycloalkylene, cycloalkylidene, or the halogen, alkyl, aryl substituted alkylene, alkylidene, cycloalkylene, and cycloalkylidene radicals as well as alkarylene and aromatic radicals and a ring fused to both Ar groups.

Typical preferred oligomers have recurring units having the following structure:

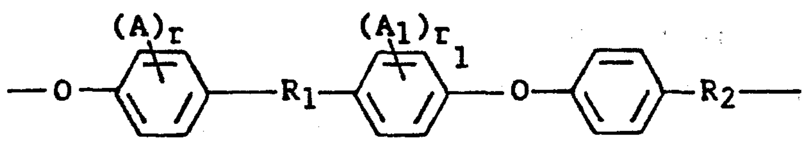

as described in U.S. Patent 4,108,837, supra. In the foregoing formula A and $A_1$ can be the same or different inert substituent groups as alkyl groups having from 1 to 4 carbon atoms, halogen atoms (e.g., fluorine, chlorine, bromine or iodine) or alkoxy radicals having from 1 to 4 carbon atoms, r and $r_1$ are integers having a value of from 0 to 4, inclusive. Typically, $R_1$ is representative of a bond between aromatic carbon atoms or a divalent connecting radical and $R_2$ represents sulfone,

carbonyl, or sulfoxide. Preferably, $R_1$ represents a bond between aromatic carbon atoms. Even more preferred are the oligomeric polysulfones of the above formula wherein r and $r_1$ are zero, $R_1$ is a divalent connection radical of the formula

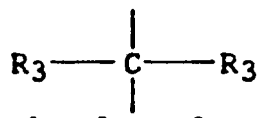

wherein $R_3$ is independently selected from lower alkyl, aryl, and the halogen substituted groups thereof, preferably methyl and $R_2$ is a sulfone group.

The poly(aryl ether) oligomers have a reduced viscosity of from about 0.10 to about 0.45 dl/g as measured in an appropriate solvent at an appropriate temperature depending on the particular polyether, such as in methylene chloride at 25°C.

The preferred poly(aryl ether) oligomers have repeating units of the formula:

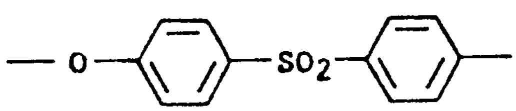

and

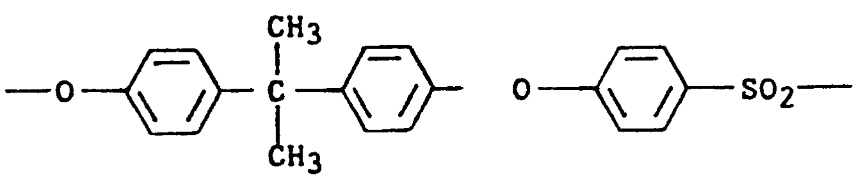

The polyarylates which are suitable for use in this invention are derived from a dihydric phenol and at least one aromatic dicarboxylic acid and have a reduced viscosity of from about 0.4 to greater than about 1.0, preferably from about 0.6 to about

0.8 dl/gm, as measured in chloroform (0.5 g/dl chloroform) or other suitable solvent at 25°C.

A particularly desirable dihydric phenol is of the following formular:

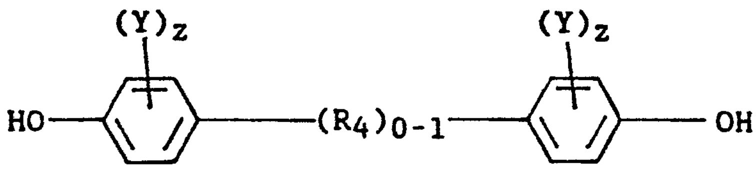

wherein Y is selected from alkyl groups of 1 to 4 carbon atoms, chlorine or bromine, each z, independently, has a value of from 0 to 4, inclusive, and $R_4$ is a divalent saturated or unsaturated aliphatic hydrocarbon radical, particularly an alkylene or alkylidene radical having from 1 to 3 carbon atoms, or a cycloalkylidene or cycloalkylene radicals having up to and including 9 carbon atoms. The preferred dihydric phenol is bisphenol-A. The dihydric phenols may be used individually or in combination.

The aromatic dicarboxylic acids that may be used in this invention inclue terephthalic acid, isophthalic acid, any of the naphthalene dicarboxylic acids and mixtures thereof, as well as alkyl substituted homologs of these carboylic acids, wherein the alkyl group contains from 1 to about 4 carbon atoms, and acids containing other inert substituents, such as halides, alkyl or aryl ethers, and the like. Preferably, mixtures of isophthalic and terephthalic acids are used. The isophthalic acid to terephthalic acid ratio in the mixture is from about 20:80 to about 100:0, while the most preferred acid ratio is from about 75:25 to about

50:50. Also, from about 0.5 to about 20 percent of aliphatic diacids containing from 2 to about 10 carbon atoms, such as adipic acid, sebacic acid, and the like may be additionally used in the polymerization reaction.

The polyarylates of the present invention can be prepared by any of the well known prior art polyester forming reactions, such as the reaction of the acid chlorides of the aromatic dicarboxylic acids with the dihydric phenols; the reaction of the diaryl esters of the aromatic dicarboxylic acids with the dihydric phenols; or the reaction of the aromatic diacids with diester derivatives of the dihydric phenol. These processes are described in, for example, U.S. Patents 3,317,464; 3,948,856; 3,780,148; 3,824,213; and 3,133,898.

Preferably, the polyarylates used in this invention are prepared by the process described in U.S. Patent 4,321,355. The process in said U.S. Patent prepares polyarylates having a reduced viscosity of from about 0.5 to greater than 1.0 dl/g. said process comprises the following steps:

(a) reacting an acid anhydride derived from an acid containing from 2 to 8 carbon atoms with at least one dihydric phenol to form the corresponding diester; and

(b) reacting said diester with at least one aromatic dicarboxylic acid at a temperature sufficient to form the polyarylate, wherein the improvement comprises removing residual acid anhydride, after formation of the dihydric phenol diester, so that its concentration is less than about 1500 parts per million.

The poly(aryl ether) oligomer is used in plasticizing amounts i.e. from about 5 to about 25, preferably from about 5 to about 15 weight percent, most preferably 10 weight percent.

The glass which may be used herein may be in the form of fiber, etc. The glass is used in amounts of from about 5 to about 30, preferably from about 10 to about 20 weight percent.

Other additives may be included in the composition of this invention. These additives include pigments, reinforcing agents, such as carbon fibers; thermal stabilizers; ultraviolet light stabilizers, impact modifiers of one or more thermoplastic polymers, and the like.

The compositions are prepared by blending the polyarylate, poly(aryl ether) oligomer, glass, and any other optional ingredients by any conventional mixing methods. For example, the polyarylate, poly(aryl ether), and glass are mixed in powder or granular form in an extruder and the mixture extruded into strands. The strands are chopped into pellets and the pellets molded into the desired article.

## EXAMPLES

The following examples serve to give specific illustrations of the practice of this invention but they are not intended in any way to limit the scope of this invention. In these examples, all parts and percentages are on a weight basis unless otherwise specified.

In the Examples the following designations are used:

PS oligmer -

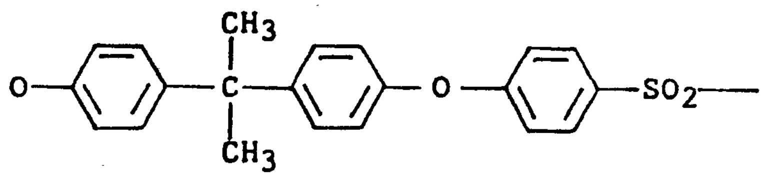

having a reduced viscosity of 0.34 dl/g as measured in methylene chloride at 25°C.

CONTROL A

A blend of 90 weight percent of a polyarylate (prepared from bisphenol-A and a mixture of 50 mole percent of terephthalic acid chloride and 50 mole percent of isophthalic acid chloride by conventional methods) having a reduced viscosity of 0.66 dl/g as measured in p-chlorophenol at 49°C and 10 weight percent of glass fiber (OCF 7201 obtained from Owens Corning) was injection molded in a 3 in. Van Dorn molding machine at the following temperatures: rear 620°F, middle 680°F, front 685°F, nozzle 644°F and stock 740°F, into ASTM test bars. The ASTM test bars were tested for the following mechanical properties: tensile strength and modulus according to ASTM D-638; elongation at break according to ASTM D-256; tensile impact strength according to ASTM D-1822 and heat distortion temperature according to ASTM D-634.

The results are shown in Table I.

Example 1

81 weight percent of the polyarylate described in Control A was tumble mixed with 10 weight percent of the glass described in Control A

and 9 weight percent of PS oligomer. The blend was injection molded and tested by the procedure described in Control A.

The results are shown in Table I.

Control B

80 weight percent of the polyarylate described in Control A was blended with 20 weight percent of the glass described in Control A by the procedure as described in Example 1. The blend was injection molded and tested by the procedure described in Control A.

The results are shown in Table I.

Example 2

72 weight percent of the polyarylate described in Control A was blended with 20 weight percent of the glass described in Control A and 8 weight percent of PS oligomer by the procedure as described in Example 1. The blend was injectin molded and tested by the procedure described in Control A.

The results are shown in Table I.

TABLE I

| Example | Control A | 1 | Control B | 2 |
|---|---|---|---|---|
| Polyaylate | 90 | 81 | 80 | 72 |
| Glass Fiber | 10 | 10 | 20 | 20 |
| Polysulfone | - | 9 | - | 8 |
| Inherent Viscosity (g/10 min.) (375°C) | .47 | .52 | .47 | .57 |
| Tensile Strength (psi) | 12,500 | 11,200 | 15,000 | 12,900 |
| Tensile Elongation (Break) (%) | 4.5 | 6.2 | 3.1 | 3.7 |
| Tensile Modulus (Kpsi) | 560 | 498 | 778 | 737 |
| Tensile Impact ($ft\text{-}lbs/in^2$) | - | 52 | 59 | 43 |
| Izod Impact (Notched) (ft-lbs/in) | 1.1 | 1.4 | 1.3 | 1.7 |
| Heat Distortion . Temp. (°C) (1/4 in) | 177 | 177 | 180 | 186 |

The alkyl groups with 1 to 3 or 4 carbon atoms are methyl, ethyl, n- and i-propyl, n-, i- and sec.-butyl and tert.-butyl. (This is also valid for alkyl in alkoxy.)
Lower alkyl contains 1 to 6, preferably 1 to 4, carbon atoms. Cycloalkylidene and cycloalkylene radicals contain 3,4,5,6,7,8 or 9 carbon atoms in ring structure, like the radicals derived from cyclopentane, cyclohexane, cycloheptane and cyclooctane.
Alkylene and alkylidene radicals contain 1,2 or 3 carbon atoms.

WHAT IS CLAIMED IS:

1. A plasticizer polyarylate composition comprising in admixture, a polyarylate derived from a dihydric phenol and at least one aromatic dicarboxylic acid and having a reduced viscosity of from about 0.4 to greater than 1.0 dl/g, from about 5 to about 30 weight percent of glass fibers and a plasticizing amount of a poly(aryl ether) having a reduced viscosity of from about 0.10 to about 0.45 dl/g.

2. A composition as defined in claim 1 wherein the dihydric phenol is of the formula:

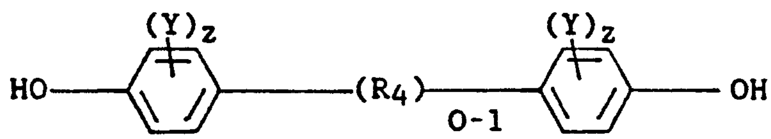

wherein Y is selected from alkyl groups of 1 to 4 carbon atoms, chlorine or bromine, each z, independently, has a value of from 0 to 4, inclusive, and $R_4$ is a divalent saturated or unsaturated aliphatic hydrocarbon radical selected from alkylene and alkylidene radicals having from 1 to 3 carbon atoms, and cycloalkylene or cycloalkylidene radicals having up to and including 9 carbon atoms.

3. A composition as defined in claim 2 wherein each z is 0 and $R_4$ is an alkylidene radical of 3 carbon atoms.

4. A composition as defined in claim 1 wherein the aromatic dicarboxylic acid is a mixture of isophthalic and terephthalic acids.

5. A composition as defined in claim 1 wherein the poly(aryl ether) comprises recurring units of the formula:

$$-O-E-O-E'-$$

wherein E is the residuum of a dihydric phenol and E' is the residuum of a benzenoid compound having an inert electron withdrawing group.

6. A composition as defined in claim 5 wherein the poly(aryl ether) has recurring units having the formula:

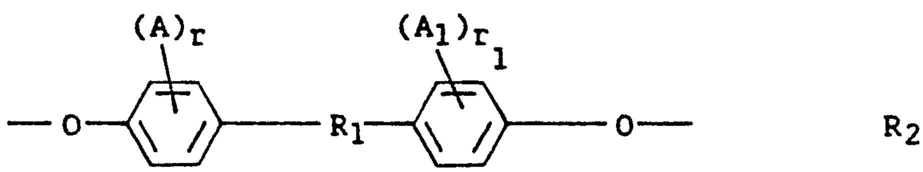

A and $A_1$ can be the same or different inert substituent groups and are selected from alkyl groups having from 1 to 4 carbon atoms, fluorine, chlorine, bromine, iodine, or alkoxy radicals having from 1 to 4 carbon atoms, $R_1$ represents a bond between aromatic carbon atoms or a divalent connecting radical, $R_2$ is sulfone, carbonyl or sulfoxide, r and $r_1$ are integers having a value of from 0 to 4, inclusive.

7. A composition as defined in claim 6 wherein r and $r_1$ are 0, $R_2$ is $SO_2$, and $R_1$ is the following;

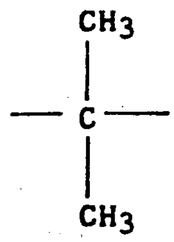

8. A composition as defined in claim 1 wherein the oligomeric poly(aryl ether) is used in amounts of from about 5 to about 25 weight percent.

9. A composition as defined in claim 1 wherein the glass fiber is present in amounts of from about 10 to about 20 weight percent.

0167897

European Patent Office

# EUROPEAN SEARCH REPORT

Application number

EP 85 10 7561

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
| --- | --- | --- | --- |
| D,X | EP-A-0 058 404 (U.C.C.)<br>* Claims 1-8; page 8, lines 21-26 *<br>----- | 1-9 | C 08 L 67/02 //<br>C 08 K 7/14<br>(C 08 L 67/02<br>C 08 L 71:00 ) |
| | | | TECHNICAL FIELDS SEARCHED (Int. Cl.4) |
| | | | C 08 L |

The present search report has been drawn up for all claims

| Place of search | Date of completion of the search | Examiner |
| --- | --- | --- |
| THE HAGUE | 20-09-1985 | DECOCKER L. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82